# EUROPÄISCHE PATENTSCHRIFT

(11) **EP 2 932 128 B1**
(45) Veröffentlichungstag und Bekanntmachung des Hinweises auf die Patenterteilung: **18.11.2020**
(21) Anmeldenummer: 13805841.7
(22) Anmeldetag: 10.12.2013
(51) Int. Cl.: F16D 21/06, F16D 25/0638

(54) **DOPPELSCHALTKUPPLUNG MIT ZWEI KRAFTSCHLÜSSIG WIRKSAMEN KUPPLUNGSEINHEITEN**
DUAL CLUTCH COMPRISING TWO CLUTCH UNITS WHICH ACT IN A FORCE-FITTING MANNER
DOUBLE EMBRAYAGE COMPRENANT DEUX UNITÉS D'EMBRAYAGE FONCTIONNANT À FORCE

(30) Priorität: 12.12.2012 DE 102012222915
(43) Veröffentlichungstag der Anmeldung: 21.10.2015
(73) Patentinhaber: Stromag GmbH, 59425 Unna (DE)
(72) Erfinder: DATEMA, Hendrik, 59065 Hamm (DE); GLOMM, Matthias, 58640 Iserlohn (DE); HÄSEKER, Thomas, 92283 Lauterhofen (DE)
(74) Vertreter: Patentanwälte Ruff, Wilhelm, Beier, Dauster & Partner mbB
(86) Internationale Anmeldenummer: PCT/EP2013/076116
(87) Internationale Veröffentlichungsnummer: WO 2014/090817

(56) Entgegenhaltungen:
- DE-A1-102010 046 633
- DE-B1- 2 618 356
- DE-B3-102008 048 801
- STROMAG: "Hydraulisch geschaltete Lamellenkupplungen für Schiffsgetriebe// Hydraulicly Operated Multi-Disc Clutcher for Marine Gears", INTERNET CITATION, 1999, Seiten 1-17, XP002662055, Gefunden im Internet: URL:http://www.stromag.de/fileadmin/user_u pload/Dokumente/Produktkataloge/Kupplungen /d228_kms.pdf [gefunden am 2011-10-25]

## Beschreibung

Die Erfindung betrifft eine Doppelschaltkupplung mit zwei kraftschlüssig wirksamen Kupplungseinheiten, die auf einer gemeinsamen Kupplungsnabe- auf eine Kupplungsdrehachse bezogen - drehfest und axial beweglich gelagert sind, sowie mit einer axial fest zwischen den Kupplungseinheiten auf der Kupplungsnabe gehaltenen, mehrteiligen Druckscheibenanordnung, und mit zwei axial beweglichen Druckkolben, die mittels jeweils einer in der Kupplungsnabe positionierten Druckfederanordnung lüftbar sind, wobei jede Aussparung in die Kupplungsnabe als axial erstrecktes Sackloch eingebracht ist.

Eine derartige Doppelschaltkupplung ist aus einem Katalog Nr. D 228 der Firma Stromag AG mit Datum 01.1999 publiziert und als Druckschrift XP-002662055 bekannt. Die bekannte Doppelschaltkupplung weist zwei Lamellenpakete auf, die auf einer gemeinsamen Kupplungsnabe drehfest und axial beweglich gelagert sind. Die beiden Lamellenpakete sind durch eine Druckscheibenanordnung voneinander getrennt, die außen auf der Kupplungsnabe aufsitzt und axial auf der Kupplungsnabe gesichert ist. Die beiden Lamellenpakete sind durch jeweils einen axial beweglichen Druckkolben beaufschlagbar, die mittels jeweils einer in der Kupplungsnabe positionierten Druckfederanordnung in eine Lüftstellung für die Lamellenpakete überführbar sind.

Aus der DE 10 2010 046 633 A1 ist eine weitere Doppelschaltkupplung bekannt, bei der eine Druckscheibenanordnung axial zwischen zwei Lamellenpaketen angeordnet ist. Die Druckscheibenanordnung ist in einer nach außen offenen Radialnut der Kupplungsnabe aufgenommen. An der Druckscheibenanordnung stützen sich entsprechende Druckfedern der Druckfederanordnungen zum Lüften der Druckkolben ab. Die entsprechenden Aussparungen gegenüberliegender Druckfedern in der Kupplungsnabe sind koaxial zueinander ausgerichtet und werden jeweils durch eine über die gesamte Länge der Kupplungsnabe durchgängige, gemeinsame Bohrung verwirklicht. Die Druckscheibenanordnung ist dreiteilig aufgebaut aus zwei in Umfangsrichtung aneinanderschließenden Druckscheibenabschnitten sowie einem Trägerring, mit dem die Druckscheibenabschnitte axial verbunden sind.

Andere Doppelschaltkupplungen sind aus der US 2009/0084652 A1 oder der DE 10 2008 048 801 B3 bekannt.

Aufgabe der Erfindung ist es, eine Doppelschaltkupplung der eingangs genannten Art zu schaffen, die eine Demontage und eine erneute Montage ermöglicht.

Diese Aufgabe wird dadurch gelöst, dass die Druckscheibenanordnung in einer Radialnut der Kupplungsnabe aufgenommen ist, die - auf die Kupplungsdrehachse bezogen - radial und/oder axial zu den Sacklöchern beabstandet ist. Durch die Aufnahme der Druckscheibenanordnung in der Radialnut wird eine sichere Fixierung der Druckscheibenanordnung auf der Kupplungsnabe erzielt. Dadurch, dass die Radialnut zu den Sacklöchern radial und/oder axial beabstandet ist, kann die Druckscheibenanordnung unbeeinflusst von Lage und Funktion der Druckfederanordnungen montiert und demon-tiert werden. Bei der DE 10 2010 046 633 A1 war eine Demontage der Druckscheibenanordnung nach erfolgreicher Erstmontage nahezu nicht möglich, da wenigstens eine Druckfederanordnung sich axial an der Druckscheibenanordnung abstützt und aufgrund der hohen Federspannung eine Demontage der Druckscheibenanordnung nicht oder nur unter erschwerten Bedingungen möglich macht.

In Ausgestaltung der Erfindung weist die Druckscheibenanordnung wenigstens zwei in Umfangsrichtung aneinanderschließende Druckscheibenabschnitte sowie einen einteiligen Trägerring auf, mit dem die Druckscheibenabschnitte verbunden sind. In vorteilhafter Weise weist jeder Druckscheibenabschnitt radial innenliegend einen axial erstreckten Absatz auf, an den der Trägerring radial nach außen ansetzt. Dabei entspricht vorzugsweise eine Axialerstreckung des Absatzes einer axialen Dicke des Trägerringes. Um eine ausschließliche Reibanlage des Trägerringes zu gewährleisten, ist der Trägerring vorzugsweise immer geringfügig dicker als die Axialerstreckung des Absatzes. In vorteilhafter Weise entspricht ein radialer Abstand des Absatzes zu einer radial äußeren Randkante des jeweiligen Druckscheibenabschnittes einer Radialerstreckung des Trägerringes. Durch die beschriebenen Ausgestaltungen wird für die Kupplungseinheiten eine Anlagefläche an einem planen Teil der Druckscheibenanordnung erzielt, wodurch sich eine besonders gleichmäßige Flächenpressung für die entsprechenden Kupplungseinheiten ergibt. In weiterer Ausgestaltung entspricht die Radalerstreckung des Trägerringes zumindest weitgehend einer Radialerstreckung einer wirksamen Anlagefläche der benachbarten Kupplungseinheit. Als Kupplungseinheit ist bevorzugt ein Lamellenpaket aus mehreren Innen- und Außenlamellen vorgesehen. Sowohl der Trägerring gegenüber der benachbarten Kupplungseinheit wie auch eine der anderen Kupplungseinheit zugewandte Stirnfläche der wenigstens zwei Druckscheibenabschnitte bilden entsprechend plane und radial einteilig durchgängige Anlageflächen. Durch die Ausgestaltungen liegt der Trägerring zudem radial nach innen abgestützt passgenau an den Druckscheibenabschnitten an, so dass Außenflächen des Trägerringes bündig und fluchtend mit korrespondierenden Außenkonturen der Druckscheibenabschnitte abschließen. Hierdurch liegen die Druckscheibenabschnitte und der Trägerring besonders kompakt und paketförmig aneinander an, so dass sich im Kupplungsbetrieb allenfalls geringe elastische Verformungen zwischen Trägerring und Druckscheibenabschnitten ergeben. Auch durch diese Maßnahmen ergibt sich eine besonders gleichmäßige Flächenpressung der Druckscheibenanordnung relativ zu den benachbarten Kupplungseinheiten, insbesondere Lamellenpaketen. Durch die beschriebenen Ausgestaltungen liegen die Druckscheibenabschnitte und der Trägerring derart flächig aneinander an, dass im Kupplungsbetrieb auch bei elastischen Verformungen ein Kraftfluss immer über die breiten Anlageflächen zwischen den Druckscheibenabschnitten und dem Trägerring erfolgt.

In weiterer Ausgestaltung der Erfindung sind die wenigstens zwei Druckscheibenabschnitte an ihren in Umfangsrichtung gesehenen Trennfugen jeweils durch eine Passfeder zueinander beabstandet gehalten, die in jeweils eine komplementäre Passfedernut an einem Grund der Radialnut eingepasst ist. Dies ermöglicht eine verbesserte Montierbarkeit der Druckscheibenanordnung auf der Kupplungsnabe.

Durch die erfindungsgemäße Lösung ist es möglich, eine Demontage der Doppelschaltkupplung von einer Axialseite her zu ermöglichen und demzufolge die entsprechenden Kupplungseinheiten, insbesondere Lamellenpakete, auszutauschen. Die erfindungsgemäße Doppelschaltkupplung ist vorteilhaft für den Einsatz bei einem Industriegetriebe vorgesehen, vorzugsweise für einen Antrieb einer Explorationspumpe für die Förderung von Erdöl. Alternativ kann die Erfindung auch bei Werkzeugmaschinen, bei Industrieanlagen oder bei Nutzfahrzeugen eingesetzt werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
Fig. 1 zeigt in einer Frontansicht eine Ausführungsform einer erfindungsgemäßen Dcppelschaltkupplung,
Fig. 2a einen Längsschnitt durch die Doppelschaltkupplung entlang der Schnittlinie a-a in Fig. 1,
Fig. 2b einen Längsschnitt durch die Doppelschaltkupplung nach Fig. 1 entlang der Schnittlinie b-b,
Fig. 3 in vergrößerter Frontansicht eine mehrteilige Druckscheibenanordnung der Doppelschaltkupplung nach den Fig. 1 bis 2b,
Fig. 4 eine Schnittdarstellung der Druckscheibenanordnung entlang der Schnittlinie IV-IV in Fig. 3 und
Fig. 5 eine weitere Schnittdarstellung der Druckscheibenanordnung nach Fig. 3 entlang der Schnittlinie V-V in Fig. 3

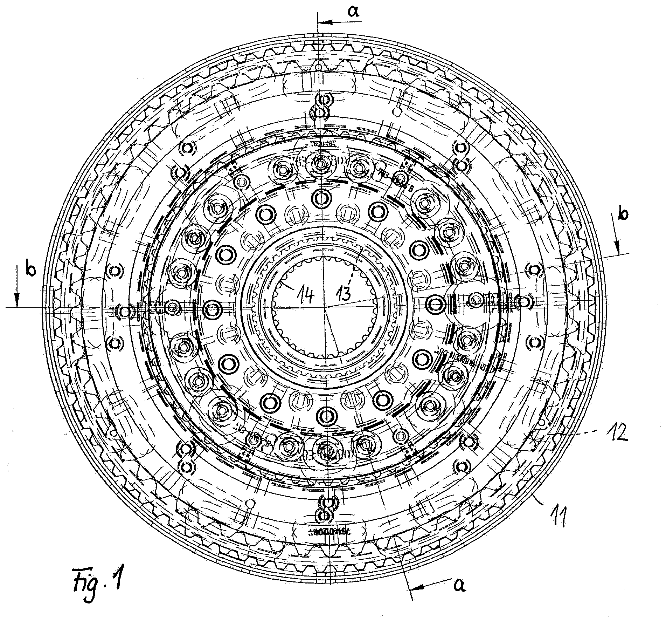

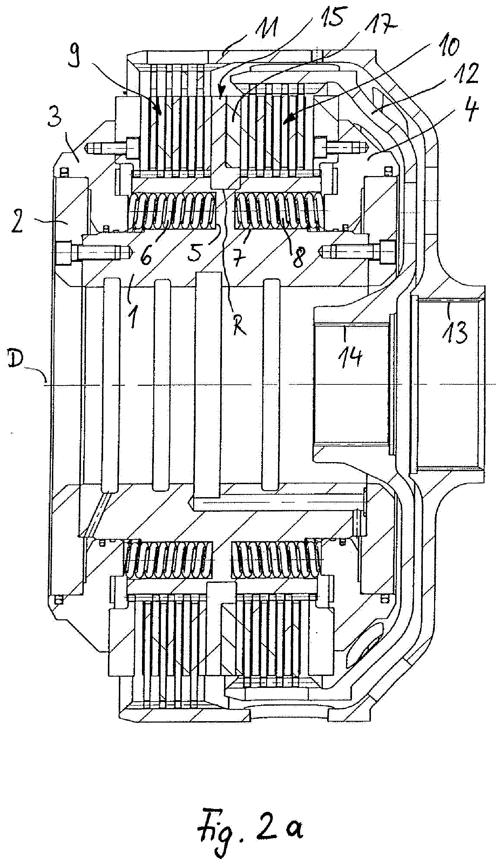

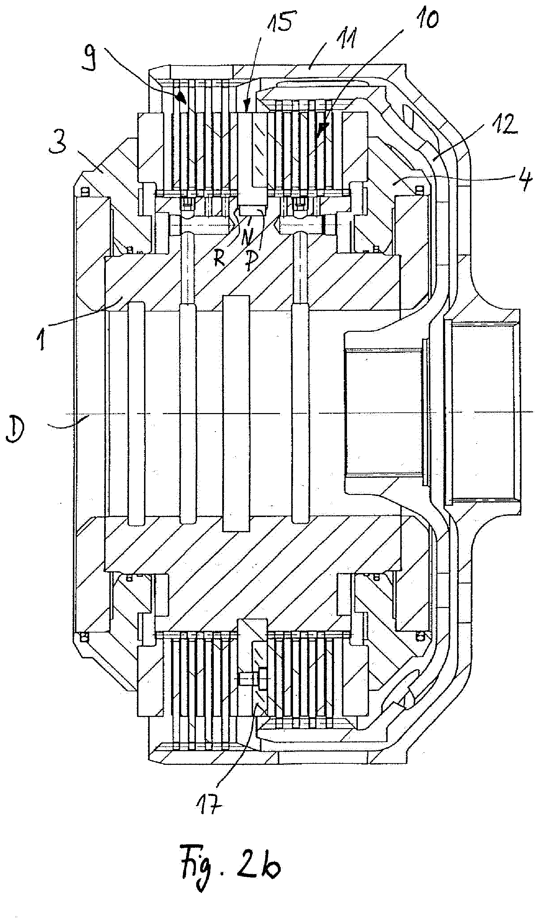

Eine hydraulische Doppelschaltkupplung nach den Fig. 1 bis 5 weist einen als Kupplungsnabe im Sinne der Erfindung dienenden, einteiligen Innenkörper 1 auf. Auf dem Innenkörper 1 ist linksseitig - auf die Zeichnungen gemäß den Fig. 2a und 2b bezogen - ein erster Druckkolben 3 und rechtsseitig ein zweiter Druckkolben 4 axial verschiebbar gelagert. Die beiden Druckkolben 3 und 4 sind gegenläufig zueinander hydraulisch druckbeaufschlagbar. Hierzu ist linksseitig eine Zylinderwand 2 für den ersten Drucckolben 3 und rechtsseitig eine zweite Zylinderwand für den Druckkolben 4 vorgesehen. Zwischen den axial zueinander beabstandeten Druckkolben 3 sind zwei Kupplungseinheiten in Form von zwei Lamellenpaketen 9, 10 angeordnet, die jeweils aus mehreren Innen- und Außenlamellen bestehen. Die Innenlamellen der beiden Lamellenpakete 9, 10 sind drehfest und axial beweglich über axial zu einer Kupplungsdrehachse D erstreckte Längsverzahnungen gehalten. Die Außenlamellen der beiden Lamellenpakete 9, 10 sind über entsprechende Außenverzahnungen mit axial erstreckten Innenverzahnungen von zwei Kupplungsglocken 11, 12 drehfest und axial beweglich verbunden, wobei die dem linken Lamellenpaket 9 zugeordnete Kupplungsglocke 11 einen ersten Abtrieb 13 und die dem zweiten Lamellenpaket 10 zugeordnete Kupplungsglocke 12 einen Abtrieb 14 definieren, der zum ersten Abtrieb 13 koaxial ausgerichtet ist.

Die beiden Lamellenpakete 9, 10 sind durch eine Druckscheibenanordnung 15 axial voneinander getrennt, die ringförmig gestaltet ist und in einer axial mittig angeordneten Radialnut R des Innenkörpers 1 eingebettet ist. Die Radialnut R ist tiefer gestaltet als entsprechende Axialnuttiefen der axial erstreckten Lamellenverzahnung des Innenkörpers 1, wie aus den Fig. 2a und 2b gut erkennbar ist.

In dem Innenkörper 1 ist zudem für jeden Druckkolben 3, 4 jeweils eine Druckfederarordnung 5, 6; 7, 8 integriert, die mehrere, über den Umfang des Innenkörpers 1 verteilt angeordnete Druckfedern 6, 8 umfasst. Die Druckfedern 6, 8 sind identisch zueinander gestaltet und als Schraubendruckfedern ausgeführt. Jede Druckfeder 6, 8 ist in einer zugehörigen Aussparung 5, 7 im Innenkörper 1 integriert. Die Aussparungen 5, 7 sind als Sacklöcher von gegenüberliegenden Stirnseiten des Innenkörpers 1 her in diesen eingebracht und erstrecken sich achsparallel zur Drehachse D der Doppelschaltkupplung. Jede Druckfeder 6, 8 stützt sich demzufolge axial innenseitig an einem Grund der zugeordneten, als Sackloch gestalteten Aussparung 5, 7 ab und übt auf den entsprechenden Druckkolben 3, 4 eine Druckkraft in Lüftrichtung aus, in der der jeweilige Druckkolben 3, 4 axial von dem zugehörigen Lamellenpaket 9, 10 weggedrückt wird. Die Radialnut R und die Aussparungen 5, 7 gehen nicht ineinander über, sondern sind vielmehr axial und radial voneinander getrennt, so dass die Radialnut R radial nach innen sowie zu beiden Axialseiten hin über ihren gesamten Umfang vollständig geschlossen ist.

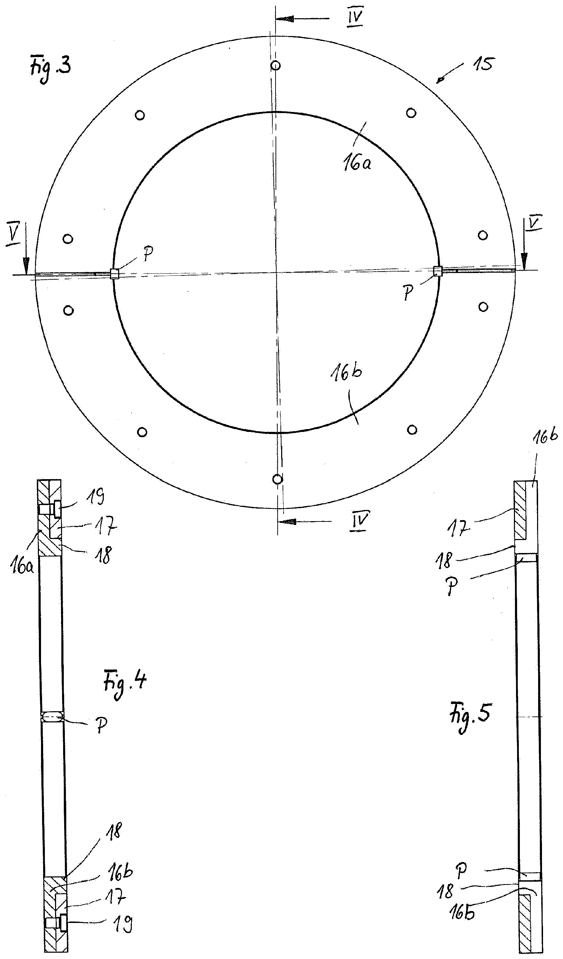

Die Druckscheibenanordnung 15 weist einen über seinen gesamten Umfang durchgängig einteiligen Trägerring 17 auf, der mit zwei halbringförmigen Druckscheibenabschnitten 16a, 16b verbunden ist. Jeder halbkreisförmige Druckscheibenabschnitt 16a, 16b weist einen axial abragenden, kreisbogenförmigen Absatz 18 auf, der radial innenseitig an dem jeweiligen Druckscheibenabschnitt 16b vorgesehen ist. Eine Axialerstreckung des Absatzes 18 entspricht in etwa einer axialen Dicke des Trägerringes 17. Dabei muss sichergestellt sein, dass die axiale Dicke des Trägerringes 17 immer geringfügig größer ist als die größte Axialerstreckung des Absatzes 18. Dadurch ist gewährleistet, dass immer die plane Außenfläche des Trägerringes 17 eine entsprechende Reibfläche für das benachbarte Lamellenpaket 10 bildet und eine Stirnfläche des Absatzes 18 nicht mit der zugewandten Reibfläche des Lamellenpakets 10 in Berührung gelangt. Eine Radialerstreckung von einer radialen Außenseite des Absatzes 18 ausgehend bis zur radial äußeren Randkante jedes Druckscheibenabschnittes 16a, 16b ist identisch zur radialen Erstreckung des Trägerringes 17, so dass der Trägerring 17 sich gemäß den Darstellungen nach den Fig. 4 und 5 mit seiner einen Stirnfläche flächig und bündig an eine zugewandte Stirnfläche des jeweiligen Druckscheibenabschnittes 16a, 16b anschmiegt und im Übrigen mit seiner Außenkontur bündig und fluchtend mit den Außenflächen des jeweiligen Druckscheibenabschnittes 16a, 16b sowohl im Bereich der Absätze 18 als auch im radial außen liegenden Randbereich abschließt.

An den beiden Trennfugen der aneinandergrenzenden Druckscheibenabschnitte 16a und 16b ist radial innenseitig jeweils eine Passfeder P eingefügt, der am radial innenseitigen Grund der Radialnut R des Innenkörpers 1 jeweils eine korrespondierende Passfedernut N zugeordnet ist. Die beiden Passfedern P werden bei einer Montage der Druckscheibenanordnung 15 in die Passfedernuten N eingesetzt, bevor die Druckscheibenabschnitte 16a und 16b radial von außen her auf den Innenkörper 1 aufgesetzt und in die Radialnut R radial eingesetzt werden. Die Passfedern P erleichtern die Positionierung der Druckscheibenabschnitte 16a, 16b innerhalb der Radialnut R. Nach dem Einsetzen der Druckscheibenabschnitte 16a, 16b wird der Trägerring 17 axial über den Innenkörper 1 geschoben und auf den kreisbogenförmigen Absätzen 18 der Druckscheibenabschnitte 16a, 16b zentriert. Anschließend wird der Trägerring 17 mittels axial wirksamer Befestigungsmittel in Form von Schraubverbindungen 19 an den Druckscheibenabschnitten 16a, 16b fixiert. Hierzu weisen die Druckscheibenabschnitte 16a, 16b Gewindebohrungen auf und im Trägerring 17 sind korrespondierende Aufnahmen für entsprechende Kopfschrauben vorgesehen, die in die Gewindebohrungen eingeschraubt werden.

Bei der anhand der Fig. 1 bis 5 dargestellten Doppelschaltkupplung ist ein einfacher Austausch der Lamellenpakete 9, 10 von einer Kupplungsseite her möglich. Dies ist die in der Darstellung nach den Fig. 2a und 2b rechte Kupplungsseite. Nach dem axialen Abziehen der beiden Kupplungsglocken 11 und 12 wird die dem Druckkolben 4 zugeordnete Zylinderwand demontiert. Nach dem axialen Abziehen des Druckkolbens 4 wird das Lamellenpaket 10 axial entfernt. Anschließend wird der Trägerring 17 der Druckscheibenanordnung 15 von dem verbleibenden Druckscheibenabschnitt abgeschraubt und axial nach rechts entfernt. Anschließend können die Druckscheibenabschnitte 16a, 16b radial nach außen aus der Radialnut R des Innenkörpers 1 herausgezogen werden. Damit liegt auch das erste Lamellenpaket 9 frei und kann axial über die rechte Kupplungsseite vom Innenkörper 1 entfernt werden. Durch entsprechend umgekehrte Montagevorgänge können anschließend ein neues Lamellenpaket 9, die Druckscheibenanordnung 15 und gegebenenfalls ein weiteres neues Lamellenpaket 10 wieder montiert werden, bevor auch der Druckkolben 4, die zugehörige Zylinderwand sowie die beiden Kupplungsglocken 11 und 12 wieder axial aufgesetzt und betriebsfertig montiert werden.

Die in Umfangsrichtung drehfeste Positionierung der Passfedern P innerhalb der Radialnut R gewährleistet eine drehfeste Abstützung für die Druckscheibenabschnitte 16a, 16b und demzufolge eine sichere drehfeste Mitnahme gemeinsam mit dem Innenkörper 1. Wie anhand der Fig. 2a und 2b gut erkennbar ist, entspricht eine Radialerstreckung des Trägerringes 17 etwa einer Radialerstreckung einer wirksamen Anlagefläche der benachbarten Innenlamelle des Lamellenpaketes 10, wobei der Trägerring 17 radial außenseitig auch zumindest weitgehend fluchtend mit einem Außenrand der ertsprechenden Innenlamelle abschließt. Dadurch ergibt sich zwischen der zugewandten Stirnfläche des Trägerringes 17 und der dem Trägerring 17 zugewandten Anlagefläche der benachbarten Innenlamelle des Lamellenpaketes 10 eine durchgängig plane Anlagefläche, wodurch eine besonders gute Flächenpressung erzielbar ist. Da auch die gegenüberliegenden Stirnflächen der Druckscheibenabschnitte 16a, 16b, die dem anderen Lamellenpaket 9 zugewandt sind, über ihre gesamte Radialerstreckung eine durchgängig plane Fläche bilden, ergibt sich auf der dem anderen Lamellenpaket 9 zugewandten Stirnseite eine besonders gleichmäßige Flächenpressung.

## Patentansprüche

1. Doppelschaltkupplung mit zwei kraftschlüssig wirksamen Kupplungseinheiten (9, 10) die auf einer gemeinsamen, einteiligen Kupplungsnabe - (1) - auf eine Kupplungsdrehachse (D) bezogen - drehfest und axial beweglich gelagert sind, sowie mit einer axial fest zwischen den Kupplungseinheiten auf der Kupplungsnabe gehaltenen, mehrteiligen Druckscheibenanordnung (15), und mit zwei axial beweglichen Druckkolben (3, 4) die mittels jeweils einer in der Kupplungsnabe positionierten Druckfederanordnung lüftbar sind, wobei jede Druckfederanordnung mehrere Druckfedern (6, 8) umfasst, die in jeweils einer Aussparung (5, 7) der Kupplungsnabe angeordnet sind, wobei jede Aussparung in die Kupplungsnabe als axial erstrecktes Sackloch eingebracht ist, **dadurch gekennzeichnet, dass** die Druckscheibenanordnung (15) in einer Radialnut (R) der Kupplungsnabe (1) aufgenommen ist, die - auf die Kupplungsdrehachse (D) bezogen - radial und/oder axial zu den Sacklöchern (5, 7) beabstandet ist.

2. Doppelschaltkupplung nach Anspruch 1, **dadurch gekennzeichnet, dass** die Druckscheibenanordnung (15) wenigstens zwei in Umfangsrichtung aneinanderschließende Druckscheibenabschnitte (16a, 16b) sowie einen einteiligen Trägerring (17) aufweist, mit dem die Druckscheibenabschnitte (16a, 16b) verbunden sind.

3. Doppelschaltkupplung nach Anspruch 2, **dadurch gekennzeichnet, dass** jeder Druckscheibenabschnitt (16a, 16b) radial innenliegend einen axial erstreckten Absatz (18) aufweist, an den der Trägerring (17) radial nach außen ansetzt.

4. Doppelschaltkupplung nach Anspruch 3, **dadurch gekennzeichnet, dass** eine Axialerstreckung des Absatzes (18) einer axialen Dicke des Trägerringes (17) entspricht.

5. Doppelschaltkupplung nach Anspruch 3 oder 4, **dadurch gekennzeichnet, dass** ein radialer Abstand des Absatzes (18) zu einer radial äußeren Randkante des jeweiligen Druckscheibenabschnittes (16a, 16b) einer Radialerstreckung des Trägerringes (17) entspricht.

6. Doppelschaltkupplung nach einem der vorhergehenden Ansprüche, **dadurch gekennzeichnet, dass** die Radialerstreckung des Trägerringes (17) zumindest weitgehend einer Radialerstreckung einer wirksamen Anlagefläche der benachbarten Kupplungseinheit (9, 10) entspricht.

7. Doppelschaltkupplung nach einem der vorhergehenden Ansprüche, **dadurch gekennzeichnet, dass** axial wirksame Befestigungsmittel (19) vorgesehen sind, die die Druckscheibenabschnitte (16a, 16b) mit dem Trägerring (17) verbinden.

8. Doppelschaltkupplung nach einem der vorhergehenden Ansprüche, **dadurch gekennzeichnet, dass** die wenigstens zwei Druckscheibenabschnitte (16a, 16b) an ihren in Umfangsrichtung gesehenen Trennfugen jeweils durch eine Passfeder (P) zueinander beabstandet gehalten sind, die in jeweils eine komplementäre Passfedernut (N) an einem Grund der Radialnut (R) eingepasst ist.

## Claims

1. Dual clutch, comprising two clutch units (9, 10) which act in a nonpositive manner and which are mounted on a common, one-part clutch hub (1) for conjoint rotation and axial movement - in relation to an axis of clutch rotation (D) - comprising a multipart pressure disk arrangement (15) which is held in an axially fixed manner on the clutch hub between the clutch units, and comprising two axially movable pressure pistons (3, 4), each of which can be released by means of a compression spring arrangement positioned in the clutch hub, wherein each compression spring arrangement comprises a plurality of compression springs (6, 8) each of which is arranged in an aperture (5, 7) in the clutch hub, wherein each aperture is introduced into the clutch hub as an axially extending blind hole,
**characterized in that**
the pressure disk arrangement (15) is accommodated in a radial groove (R) in the clutch hub (1), said groove being spaced apart radially and/or axially from the blind holes (5, 7) - in relation to the axis of clutch rotation (D).

2. Dual clutch according to claim 1, **characterized in that** the pressure disk arrangement (15) has at least two pressure disk segments (16a, 16b), which adjoin one another in the circumferential direction, and a one-part carrier ring (17), to which the pressure disk segments (16a, 16b) are connected.

3. Dual clutch according to claim 2, **characterized in that** each pressure disk segment (16a, 16b) has an axially extending shoulder (18) situated radially on the inside, which shoulder is adjoined radially on the outside by the carrier ring (17).

4. Dual clutch according to claim 3, **characterized in that** an axial extent of the shoulder (18) corresponds to an axial thickness of the carrier ring (17).

5. Dual clutch according to claim 3 or 4, **characterized in that** a radial distance of the shoulder (18) from a radially outer boundary edge of the respective pressure disk segment (16a, 16b) corresponds to a radial extent of the carrier ring (17).

6. Dual clutch according to any of the preceding claims, **characterized in that** the radial extent of the carrier ring (17) corresponds at least largely to a radial extent of an effective contact surface of the adjacent clutch unit (9, 10).

7. Dual clutch according to any of the preceding claims, **characterized in that** axially acting fastening means (19) are provided, which connect the pressure disk segments (16a, 16b) to the carrier ring (17).

8. Dual clutch according to any of the preceding claims, **characterized in that** the at least two pressure disk segments (16a, 16b) are each held spaced apart at the joints thereof as seen in the circumferential direction by a key (P), each of which keys is fitted into a complementary key slot (N) in a base of the radial groove (R).

## Revendications

1. Double embrayage comprenant deux unités d'embrayage (9, 10) fonctionnant en liaison par complémentarité de forces, montées solidaires en rotation et axialement mobiles sur un moyeu d'embrayage (1) commun monobloc - par rapport à un axe de rotation (D) de l'embrayage - ainsi que comprenant un arrangement de disque de pression (15) en plusieurs parties retenu axialement fixe entre les unités d'embrayage sur le moyeu d'embrayage, et comprenant deux pistons à pression (3, 4) axialement mobiles, chacun desserrable par un arrangement de ressort de compression positionné dans le moyeu d'embrayage, chaque arrangement de ressort de compression présentant plusieurs ressorts de compression (6, 8) respectivement arrangés dans un renfoncement (5, 7) du moyeu d'embrayage, chaque renfoncement dans le moyeu d'embrayage étant agencé sous forme de trou borgne s'étendant axialement,
**caractérisé en ce que**
l'arrangement de disque de pression (15) est placé dans une rainure radiale (R) du moyeu d'embrayage (1), ladite rainure espacée des trous borgnes (5, 7) radialement et/ou axialement - par rapport à l'axe de rotation (D) de l'embrayage.

2. Double embrayage selon la revendication 1, **caractérisé en ce que** l'arrangement de disque de pression (15) présente au moins deux segments de disque de pression (16a, 16b) adjacentes dans la direction circonférentielle ainsi qu'un anneau support (17) monobloc pour connecter les segments de disque de pression (16a, 16b).

3. Double embrayage selon la revendication 2, **caractérisé en ce que** chaque segment de disque de pression (16a, 16b) présente un épaulement (18) s'étendant axialement situé radialement à l'intérieur, l'anneau support (17) faisant appui sur ledit épaulement radialement vers l'extérieur.

4. Double embrayage selon la revendication 3, **caractérisé en ce qu'**une extension axiale de l'épaulement (18) correspond à une épaisseur axiale de l'anneau support (17).

5. Double embrayage selon la revendication 3 ou 4, **caractérisé en ce qu'**une distance radiale de l'épaulement (18) d'une arête de bord radialement extérieur du segment de disque de pression (16a, 16b) respectif correspond à une extension radiale de l'anneau support (17).

6. Double embrayage selon l'une quelconque des revendications précédentes, **caractérisé en ce que** l'extension radiale de l'anneau support (17) correspond au moins largement à une extension radiale d'une surface de contact efficace de l'unité d'embrayage (9, 10) adjacente.

7. Double embrayage selon l'une quelconque des revendications précédentes, **caractérisé en ce que** des moyens de fixation (19) efficaces axialement sont prévus pour connecter les segments de disque de pression (16a, 16b) à l'anneau support (17).

8. Double embrayage selon l'une quelconque des revendications précédentes, **caractérisé en ce que** les au moins deux segments de disque de pression (16a, 16b) sont retenus chacun espacés l'un de l'autre à l'endroit de joints de séparation, dans la direction circonférentielle, par une clavette (P) enclavée dans une rainure de clavette (N) complémentaire respective sur un fond de la rainure radiale (R).
